# EUROPÄISCHE PATENTSCHRIFT

(11) **EP 3 120 081 B1**
(45) Veröffentlichungstag und Bekanntmachung des Hinweises auf die Patenterteilung: **25.04.2018**
(21) Anmeldenummer: 15707059.0
(22) Anmeldetag: 16.02.2015
(51) Int. Cl.: B32B 3/06, B32B 3/26, B32B 3/30, B32B 5/02, B32B 7/04, B32B 7/06, B32B 7/14, F24D 3/14, A44B 18/00, F16L 3/26

(54) **HALTEFLÄCHE EINER FLÄCHENHEIZUNG**
RETAINING SURFACE OF A RADIANT HEATING SYSTEM
SURFACE DE RETENUE POUR CHAUFFAGE PAR SURFACE CHAUFFANTE

(30) Priorität: 20.03.2014 DE 202014101286 U
(43) Veröffentlichungstag der Anmeldung: 25.01.2017
(73) Patentinhaber: Wischemann Kunststoff GmbH, 48607 Ochtrup (DE)
(72) Erfinder: WISCHEMANN, Ingo, 48607 Ochtrup (DE); OSSENDORF, Stefan Hubert, 48607 Ochtrup (DE)
(74) Vertreter: Habbel, Ludwig
(86) Internationale Anmeldenummer: PCT/EP2015/053217
(87) Internationale Veröffentlichungsnummer: WO 2015/139898

(56) Entgegenhaltungen:
- EP-A1- 1 078 582
- EP-A1- 1 645 700
- EP-A2- 0 813 277
- EP-A2- 0 947 779
- WO-A1-99/14045
- DE-A1- 2 742 429
- DE-U1- 8 107 402
- DE-U1- 8 134 009
- DE-U1-202010 009 133
- DE-U1-202010 011 520

## Beschreibung

Die Erfindung betrifft eine Haltefläche einer Flächenheizung nach dem Oberbegriff des Anspruchs 1.

Gattungsfremde Halteflächen sind in Form so genannter Noppenplatten bekannt. Vorsprünge, die zwischen sich Hinterschnitte aufweisen, dienen dazu, ein Flächenheizungsrohr über seinen Äquator hinaus zu umfassen, so dass es formschlüssig an der Haltefläche gehalten wird.

Im Unterschied dazu weist eine gattungsgemäße Haltefläche eine Strukturfläche auf, welche zur Festlegung von Flächenheizungsrohren mittels eines Haftverschlusses dient. Ein Flächenheizungsrohr liegt dieser Haltefläche nur mit einem geringen Anteil seines Umfangs an.

Die gattungsgemäße Haltefläche weist erstens einen Träger auf, welcher beispielsweise die grundsätzliche Formgebung der Haltefläche bestimmt, z. B. rechteckig länglich, quadratisch, sechseckig oder dergleichen, sowie die Materialstärke von 1-2 mm bis hin zu mehreren Zentimetern. Der Träger bestimmt weiterhin mechanische Eigenschaften der Haltefläche, z. B. ob diese weich oder starr, verformbar oder formstabil ist. Der Träger bestimmt schließlich die grundsätzliche Topographie der Haltefläche, z. B. ob diese eine im Wesentlichen ebene oder eine profilierte Oberfläche aufweist.

Diese ebene oder profilierte Oberfläche der Haltefläche wird auch als Vorderseite bezeichnet, da an ihr die erwähnten Gegenstände festgelegt werden können. Mit ihrer gegenüberliegenden Rückseite wird die Haltefläche ihrerseits befestigt, z. B. auf einen Untergrund aufgelegt oder an einem Hintergrund befestigt.

Die gattungsgemäße Haltefläche weist zweitens eine Strukturfläche auf, welche die eine Hälfte des Haftverschlusses bildet. Sie ist auf der erwähnten Vorderseite des Trägers angeordnet und bildet somit die Vorderseite der Haltefläche.

Aus der Praxis sind gattungsgemäße Halteflächen bekannt. Dabei bildet eine Folie den Träger, der vollflächig mit einer Strukturfläche verklebt ist, nämlich mit dem Schlaufen aufweisenden Velours- oder Flauschteil eines so genannten Klett- bzw. Häkchenverschlusses. Derartige, mit dem Velours- oder Flauschteil eines Häkchenverschlusses versehene Folien werden in der Praxis auch als Flauschfolien bezeichnet.

Die gattungsgemäße Haltefläche bzw. Flauschfolie ist auf einer formstabilen Platte aus expandiertem Polystyrol ("EPS") angeordnet, so dass der insgesamt geschaffene Gegenstand als Halteplatte bezeichnet werden kann, welcher die drei erwähnten Schichten der EPS-Platte, der Trägerfolie und der Strukturfläche aufweist. Die Halteplatte dient nicht nur zur Aufnahme der Flächenheizungsrohre z. B. einer Fußboden-, Wand- oder Deckenheizung, sondern die EPS-Platte der gattungsgemäßen Halteplatte dient zur thermischen Isolierung gegenüber dem Untergrund, auf dem die Halteplatte verlegt wird.

Zur Verlegung von Flächenheizungsrohren ist bei diesem gattungsgemäßen Stand der Technik vorgesehen, dass die Flächenheizungsrohre mit einer Gegenstruktur versehen sind, die mit der Strukturfläche der Haltefläche zusammenwirkt. Hierzu sind die Rohre mit dem Häkchenteil eines Klett- bzw. Häkchenverschlusses ummantelt. Beim Aufpressen des Flächenheizungsrohres auf die Haltefläche wird das Flächenheizungsrohr in seiner Lage durch das Zusammenwirken der beiden strukturierten Oberflächen des Flächenheizungsrohres und der Haltefläche fixiert, nämlich durch die Herstellung des Häkchenverschlusses.

Ein Häkchen- oder Klettverschluss stellt eine in der Praxis gebräuchliche Variante eines lösbaren Verschlusses dar, wobei auch andere Varianten von Verschlüssen verwendet werden können, insbesondere wenn sie jeweils eine Lagekorrektur der verlegten Rohre ermöglichen und die daher im Rahmen des vorliegenden Vorschlags als Haftverschlüsse bezeichnet werden. Beispielsweise können die beiden strukturierten Oberflächen des Flächenheizungsrohres und der Haltefläche gleich ausgestaltet sein und jeweils eine Vielzahl etwa pilzförmig ausgestalteter Halteelemente aufweisen, die ineinander gedrückt und anschließend auch wieder gelöst werden können.

Da bei einem praxisüblichen, als Klettverschluss ausgestalteten lösbaren Verschluss der mit Schlaufen versehene Flauschteil, der eine Strukturfläche bildet, preisgünstiger herstellbar ist als der Häkchenteil, welcher die damit zusammenwirkende andere Strukturfläche bildet, werden die auf dem Boden verlegten, großflächig mit einem Teil des Verschlusses versehenen Folien mit dem Flauschteil versehen und somit als Flauschfolien bezeichnet. Der demgegenüber teurere Häkchenteil ist an dem Rohr vorgesehen und üblicherweise nicht als vollflächige Ummantelung ausgestaltet, sondern als wendelförmig verlaufendes Band, so dass nur eine erheblich geringere Fläche dieses zweiten, teureren Teils des Verschlusses erforderlich ist. Unter anderen wirtschaftlichen Bedingungen kann jedoch auch vorgesehen sein, dass der Häkchenteil die Strukturfläche der Haltefläche bildet und das Rohr mit dem Flauschteil versehen ist.

Im Rahmen des vorliegenden Vorschlags liegt es, dass das erwähnte Rohr der Flächenheizung in an sich bekannter Weise eine Rohrleitung sein kann, die innen hohl ist und von einem Wärmeträgerfluid durchströmt werden kann. Es kann sich jedoch auch um eine elektrische Leitung einer Elektroheizung handeln, die eine rohrförmige Isolierung und in deren Inneren einen elektrischen Leiter aufweist. Zudem wird der Begriff der Flächenheizung verwendet, weil erheblich häufiger die entsprechenden Einrichtungen, insbesondere auch die dazu verwendeten Flächenheizungsrohre, zur Beheizung dienen. Sie können jedoch auch zur Kühlung verwendet werden, wenn durch eine Rohrleitung ein entsprechend kühles Wärmeträgerfluid geleitet wird, so dass der üblichere Begriff der Flächenheizung im Rahmen des vorliegenden Vorschlags Flächentemperiersysteme zum Heizen und / oder zum Kühlen einschließt. Aus der EP 0 947 779 A2 ist eine gattungsgemässe Haltefläche bekannt, deren Träger als Noppenfolie ausgestaltet ist, deren Noppen ein Flächenheizungsrohr durch Klemmung halten. Eine Dämmplatte ist unterhalb der Noppenfolie verbunden. Als eine Möglichkeit der Verbindung zwischen der Dämmplatte und des Trägers wird die Verwendung eines Klettverschlusses vorgeschlangen. Diese Schrift offenbart die Merkmale des Oberbegriffs des unabhängigen Anspruchs 1. Der Erfindung liegt die Aufgabe zugrunde, eine gattungsgemäße Haltefläche dahingehend zu verbessern, dass diese eine möglichst wirtschaftliche Unterkonstruktion unter den Rohren einer Flächenheizung und einen möglichst niedrigen Bodenaufbau im Bereich der Flächenheizung ermöglicht sowie eine zuverlässige Fixierung des Flächenheizungsrohres auf der Haltefläche.

Diese Aufgabe wird durch eine Haltefläche mit den Merkmalen des Anspruchs 1 gelöst. Vorteilhafte Ausgestaltungen sind in den Unteransprüchen beschrieben.

Die Erfindung schlägt mit anderen Worten vor, dass die Strukturfläche, beispielsweise der Flausch- bzw. Veloursteil eines Häkchenverschlusses, unmittelbar auf den Träger aufkaschiert ist. Das Material der Strukturfläche kann mittels eines Andruck-Werkzeugs, beispielsweise einer Walze, auf den Träger aufgepresst werden. Der Träger ist dabei in der Art plastisch verformbar, dass die Strukturfläche teilweise in die Oberfläche an der Vorderseite des Trägers eingepresst werden kann. Nach dem anschließenden Erhärten des Trägers ist eine feste Verbindung zwischen der Strukturfläche und dem Träger geschaffen, und zwar auch ohne Verwendung zusätzlicher Materialien wie z. B. Klebstoff. Dieser Vorgang wird im Rahmen des vorliegenden Vorschlags als unmittelbares bzw. direktes Aufkaschieren bezeichnet.

Die erforderliche plastische Verformbarkeit für den Kaschiervorgang kann der Träger beispielsweise während seiner Herstellung aufweisen. In diesem Fall wird nicht erst separat der Träger fertiggestellt und anschließend, eventuell Stunden oder Tage später, die Strukturfläche direkt aufkaschiert. Vielmehr wird in den plastisch verformbaren Träger, noch bevor er ausgehärtet oder abgebunden ist und somit fertiggestellt ist, die Strukturfläche aufkaschiert, so dass dieser direkte Kaschiervorgang während der Herstellung des Trägers erfolgt und separate Handhabungsschritte, z. B. auch zum Zwischenlagern, ebenso entfallen können wie der Energieaufwand, der ansonsten erforderlich wäre, um einen bereits fertiggestellten Träger zumindest an seiner Vorderseite plastisch verformbar zu machen, um das direkte Aufkaschieren zu ermöglichen.

Wenn ein Träger aus einem thermoplastischen Kunststoffmaterial verwendet wird, kann auch bei dem bereits fertiggestellten Träger eine plastische Verformbarkeit für den Kaschiervorgang dadurch ermöglicht werden, dass der Träger erwärmt wird.

Es wird also keine Flauschfolie als Zwischenprodukt benötigt, die wenigstens zwei Schichten aufweist und die ihrerseits zusätzlich auf einem Träger befestigt wird, um die Haltefläche zu schaffen, die dann auf einem Boden, an einer Wand o. dergl. verlegt werden kann. Im Vergleich beispielsweise zur Verklebung einer separaten Veloursbahn als Strukturfläche mit einer Folie, um eine Flauschfolie zu schaffen, wird auf diese Weise eine wirtschaftliche Ausgestaltung der Haltefläche begünstigt, da Material und Arbeitsschritte eingespart werden können. Zudem wird eine Zwischenschicht eingespart, was den Aufbau der Haltefläche angeht, sodass die vorschlagsgemäße Haltefläche besonders flach ausgestaltet werden kann. Im Vergleich dazu, eine handelsübliche Haltefläche zunächst selbstklebend zu beschichten, und anschließend die so erzeugte, selbstklebend ausgestaltete Haltefläche auf einen zusätzlichen Träger aufzukleben, z. B. auf eine formstabile Platte, wird erstens die Materialstärke eingespart welche ansonsten die Zwischenschicht aufweisen würde, beispielsweise die erwähnte Klebstoffschicht. Zweitens wird die vorschlagsgemäß erzielte Haltefläche auch dadurch noch flacher, dass die Strukturfläche beim Aufkaschieren auf den Träger teilweise in das verformbare Material des Trägers eingedrückt wird.

In der Praxis ist es üblich, die Haltefläche einer Flächenheizung zu bedrucken, wobei grafische Elemente wie Linien, Punkte oder Flächen in einem bestimmten Raster regelmäßig angeordnet sind. Zur Erzielung der gewünschten thermischen Leistung und zu deren gleichmäßiger Verteilung ist zu beachten, dass eine bestimmte Anzahl der Rohrleitungsabschnitte in möglichst gleichmäßigen Abständen verlegt wird, was mittels des auf die Haltefläche aufgedruckten Rasters erleichtert wird. Daher wird ein solches Raster auch als Verlegeraster bezeichnet.

Dort, wo die Strukturfläche den erhöhten Bereichen des Trägers anliegt und unmittelbar auf den Träger aufkaschiert ist, ergibt sich ein optischer Unterschied zu benachbarten Flächenabschnitten der Strukturfläche, wo sie sich lediglich auf dem Träger befindet, nicht jedoch durch den Kaschiervorgang mit dem Träger verbunden ist. Vorteilhaft kann die Reliefstruktur des Trägers in Art eines Verlegerasters ausgestaltet sein, so dass die vorschlagsgemäße Haltefläche auch ohne zusätzliche Bedruckung ein Verlegeraster optisch erkennen lässt. Eine wirtschaftliche Herstellung der Haltefläche kann daher auch dadurch unterstützt werden, dass Material und Verfahrensschritte eingespart werden können, die ansonsten für die Schaffung des Verlegerasters erforderlich wären, beispielsweise durch eine Bedruckung der Haltefläche mit Farbe.

Im Vergleich zu einer flachen Ausgestaltung der Haltefläche werden erheblich höhere Haltekräfte für die Flächenheizungsrohre vorschlagsgemäß dadurch ermöglicht, dass der Träger an seiner Oberseite, der die Strukturfläche anliegt, eine dreidimensionale Reliefstruktur aufweist. Dabei geht der vorliegende Vorschlag davon aus, dass die Flächenheizungsrohre in den tieferen Bereichen der Haltefläche verlegt werden, so dass sie beispielsweise seitlich den erhöhten Bereichen anliegen können und sich eine vergleichsweise große Kontaktfläche mit der Haltefläche ergibt, als wenn diese nur in Art einen Linienberührung auf einer ebenen Haltefläche aufliegen. Auch ohne seitlich den erhöhten Bereichen anzuliegen kann sich eine vorteilhaft größere Kontaktfläche dadurch ergeben, dass das Rohr der Strukturfläche, die muldenförmig zwischen den beiden benachbarten erhöhten Bereichen verläuft, mit einem größeren Umfangsabschnitt anliegt als bei der erwähnten Linienberührung.

Parallele Rippen können in einer ersten Ausführungsform die erhöhten Bereiche der Reliefstruktur bilden, sodass sich zwischen zwei solchen parallelen Rippen jeweils eine Rinne ergibt, in die das Flächenheizungsrohr mit einem Teil seines Umfangs eingelegt werden kann. Die Kontaktfläche zwischen dem Flächenheizungsrohr und der Haltefläche ist somit deutlich größer ist als bei Auflage eines Flächenheizungsrohres auf einer planen Haltefläche, so dass sich dementsprechend eine vergrößerte Wirkfläche zwischen dem Häkchenteil am Rohr und dem Flauschteil an der Folie zur Herstellung eines Häkchenverschlusses ergibt. Dementsprechend sind größere Abzugskräfte erforderlich, um das Flächenheizungsrohr von der Haltefläche zu trennen und dementsprechend zuverlässig ist das Heizungsrohr an der Haltefläche fixiert.

Insbesondere wenn die Strukturfläche lediglich bereichsweise mit dem Träger fest verbunden ist, nämlich wo der Träger erhöhte Bereiche aufweist, ergibt sich die Möglichkeit, dass sich die Haltefläche problemlos verformen und an das Rohr anlegen kann, welches auf die Haltefläche gedrückt wird. Wenn beispielsweise die Haltefläche während des Kaschiervorgangs mittels einer Walze auf den Träger gepresst wird, kann je nach Größe der Walze und der Reliefstruktur des Trägers bewirkt werden, dass ein Kontakt der Haltefläche nur mit den erhöhten Bereichen des Trägers erfolgt. Zwischen den erhöhten Bereichen ergeben sich folglich Bereiche, in denen die Haltefläche in einem geringen Abstand oberhalb des Trägers gespannt ist bzw. geringfügig durchhängt, sodass in diesen sogenannten tieferen Bereichen die Haltefläche der Haltefläche vergleichsweise frei beweglich ist und sich dem Rohrumfang eines an die Haltefläche angelegten Rohres anpassen kann.

Der gleiche Vorteil kann auch mit einer anderen Reliefstruktur des Trägers erzielt werden, beispielsweise mit erhöhten Bereichen, die in Form von gleichgroßen oder unterschiedlich großen Noppen ausgestaltet sind, oder die kreuzartig ausgestaltet sein können. Durch entsprechende Abstände zwischen diesen jeweiligen erhöhten Bereichen ergeben sich Mulden, die ähnlich wie die erwähnten Rinnen zwischen zwei parallelen Rippen wirken und ein Rohr mit einem Teil seines Umfangs aufnehmen können. Rein beispielhaft wird nachfolgend öfters von Rippen und Rinnen die Rede sein, wobei dies jedoch lediglich beispielhaft für die Ausgestaltung von tiefen und erhöhten Bereichen der Haltefläche steht.

Vorteilhaft kann der Träger durch eine dreidimensional verformte Tiefziehfolie geschaffen sein. Dies ermöglicht eine wirtschaftliche Herstellung der Haltefläche. Dadurch, dass die Tiefziehfolie mittels einer Thermoverformung ihre Reliefstruktur erhält, weist sie eine Temperatur auf, die das anschließende Aufkaschieren der Strukturfläche mit vergleichsweise geringem Energieeinsatz und ohne den Einsatz zusätzlicher Materialien wie z. B. Klebstoff ermöglicht. Durch die Reliefstruktur der dreidimensional verformten Tiefziehfolie erhält auch die Oberfläche der resultierenden Haltefläche eine Reliefstruktur, die tiefe und erhöhte Bereiche aufweist, nachdem der Träger mit der Strukturfläche versehen worden ist.

Eine Vergussmasse kann aufgebracht werden, nachdem die Flächenheizungsrohre auf der Haltefläche verlegt worden sind. Die Flächenheizungsrohre sind nach dem Aushärten der Vergussmasse endgültig in ihrer gewünschten Anordnung fixiert. Die Haltefläche kann vorteilhaft eine Vielzahl von Durchbrüchen aufweisen, so dass nach dem Verlegen der Flächenheizungsrohre die Vergussmasse aufgebracht werden kann, welche an den Untergrund angebunden wird und die Haltefläche mitsamt den Flächenheizungsrohren an dem Untergrund festgelegt wird, und welche zudem die Flächenheizungsrohre endgültig in ihrer gewünschten Anordnung fixiert, in welcher sie zunächst durch den geschaffenen Häkchenverschluss gehalten werden.

Vorteilhaft kann vorgesehen sein, dass die Haltefläche eine Höhe von höchstens 10 mm aufweist. So kann eine vorschlagsgemäße Haltefläche flach ausgestaltet werden und dennoch für Flächenheizungsrohre unterschiedlicher Durchmesser geeignet sein. Die flache Ausgestaltung der Haltefläche ermöglicht zudem die einfachere Herstellung des Trägers, beispielsweise indem eine Tiefziehfolie nur geringfügig verstreckt werden muss, was wirtschaftlich vorteilhaft ist.

Insbesondere kann vorteilhaft vorgesehen sein, dass die Haltefläche eine Höhe von höchstens 3 mm aufweist. Bei praktischen Versuchen hat sich herausgestellt, dass zwischen zwei erhöhten Bereichen, beispielsweise Rippen, bereits eine Mulde bzw. Rinne von 1 bis 2 mm Tiefe eine erheblich vergrößerte Kontaktfläche zwischen den beiden zusammenwirkenden Bestandteilen des Häkchenverschlusses am Rohr einerseits und an der Haltefläche andererseits ermöglicht. Abgesehen von den wirtschaftlichen Vorteilen bei der Herstellung der Haltefläche wird auch der Transport erheblich wirtschaftlicher, wenn die Haltefläche flacher ausgestaltet werden kann, weil für eine mit Haltefläche abzudeckende Fläche ein deutlich geringeres Transportvolumen erforderlich ist.

Die beiden erwähnten parallelen Rippen, die zwischen sich eine Mulde zur teilweisen Aufnahme eines Flächenheizungsrohres schaffen, werden nachfolgend als eine Linie bezeichnet und es kann vorteilhaft vorgesehen sein, auf der Haltefläche den Verlauf der Rippen in der Art von sich kreuzenden Linien vorzusehen, so dass für unterschiedliche Verlegerichtungen der Flächenheizungsrohre jeweils entsprechende Mulden bzw. Rinnen geschaffen werden, in denen die Flächenheizungsrohre zuverlässig fixiert werden können. Ähnliches gilt für die alternative Ausgestaltung von erhöhten Bereichen in der Reliefstruktur des Trägers und für den sich dadurch ergebenden Verlauf von tieferen Bereichen in der Oberfläche der Haltefläche: auch in diesem Fall ergeben sich durchgehende, tiefere Linien zwischen den erhöhten Bereichen. Um die Verlegung der Rohre in unterschiedlichen Richtungen und somit mit unterschiedlichen, jeweils gewünschten Verlegemustern zu ermöglichen, können die erwähnten Linien vorteilhaft in einer sich kreuzenden Anordnung vorgesehen sein, wobei in jeder Richtung jeweils eine Vielzahl von derartigen Linien parallel zueinander vorgesehen ist.

Dabei kann vorteilhaft vorgesehen sein, dass der Abstand der Linien zueinander größer ist als der Abstand zweier eine Linie begrenzender erhöhter Bereiche, beispielsweise der beiden eine Rinne bildenden Rippen. Die beiden Rippen können beispielsweise in einem Abstand von 8 bis 20 mm zueinander verlaufen und die Linien können beispielsweise einen Abstand zwischen 4 und 10 cm zueinander aufweisen.

Vorteilhaft können die Linien in einem quadratischen Raster angeordnet sein, so dass Flächenheizungsrohre in einer Längsrichtung und in einer dazu senkrecht verlaufenden Querrichtung verlegt werden können und Verlegeraster mit den entsprechenden Rasterabständen geschaffen werden.

Vorteilhaft kann in den Flächen, die sich zwischen den kreuzenden Linien ergeben, die Anordnung von Erhebungen vorgesehen sein. Wenn beispielsweise die Linien beiderseits von Rippen begrenzt werden, können zusätzlich zu den Rippen weitere Erhebungen in diesen Flächen vorgesehen sein. Diese Erhebungen können wie die anderen erhöhten Bereiche geformt sein, oder sie können eine davon abweichende Form aufweisen. Sie dienen dazu, bogenförmig verlaufende Flächenheizungsrohre zu führen. In Freiräumen, die zwischen den erhöhten Bereichen wie zum Beispiel den Rippen vorgesehen sind und welche tiefere Bereiche der Haltefläche bilden, bilden diese zusätzlichen Erhebungen Konturen, denen ein bogenförmig verlaufendes Rohr anliegen kann. Wenn beispielsweise ein Flächenheizungsrohr in einem Bogen von 90° verlegt werden soll und die erwähnten Linien in einem quadratischen Raster verlaufen, so kann das Flächenheizungsrohr im Bereich des Bogens ebenfalls eine vergrößerte Kontaktfläche mit der Haltefläche aufweisen verglichen mit einer planen Haltefläche, da die erwähnten Erhebungen sich nicht dort befinden, wo das Flächenheizungsrohr mit seiner tiefsten Stelle der Haltefläche anliegt, sondern das Flächenheizungsrohr kann vielmehr zwischen den Erhebungen verlegt werden, so dass die Erhebungen im Flächenheizungsrohr beispielsweise radial innen oder radial außen in seinem Bogenverlauf anliegen.

Um die erwähnten Linien zweier benachbarter Halteflächen miteinander fluchtend anzuordnen, kann vorteilhaft vorgesehen sein, zwei benachbarte Halteflächen miteinander zu verbinden, so dass diese nicht gegeneinander verrutschen und so dass dementsprechend das Verlegen von Flächenheizungsrohren auch über mehrere Halteflächen hinweg erleichtert wird. Daher kann an wenigstens einem Rand der Haltefläche ein Überlappungsstreifen vorgesehen sein, der unter der Haltefläche vorsteht, sich also seitlich über den Rand der Haltefläche hinaus weiter erstreckt und der mit einer zweiten gleichartigen Haltefläche verklebt werden kann.

Eine besonders einfache Handhabung der beiden Halteflächen kann dadurch begünstigt werden, dass die Haltefläche selbstklebend ausgestaltet ist, um im Überlappungsbereich eine Verklebung mit einer zweiten gleichartigen Haltefläche zu ermöglichen. Beispielsweise kann der Überlappungsstreifen auf seiner Oberseite selbstklebend ausgestaltet sein, so dass die zweite Haltefläche auf den selbstklebenden Überlappungsstreifen aufgelegt werden kann und somit die beiden benachbarten Halteflächen miteinander verbunden sind. Alternativ dazu kann vorteilhaft vorgesehen sein, dass die Haltefläche an ihrer Unterseite selbstklebend ausgestaltet ist. Hierdurch ist einerseits die Verklebung mit dem Überlappungsstreifen einer benachbarten Haltefläche möglich. Vorteilhaft jedoch kann auch über diesen Überlappungsbereich hinausgehend die Haltefläche an ihrer Unterseite selbstklebend ausgestaltet sein, so dass die Haltefläche, wenn sie auf einem Untergrund verlegt wird, durch die selbstklebenden Eigenschaften in ihrer Lage fixiert ist, was anschließend die Verlegung der Flächenheizungsrohre erheblich erleichtert, so dass keine zusätzlichen Elemente erforderlich sind, wie beispielsweise formstabile Trägerplatten o. dgl., auf denen die Haltefläche befestigt ist. Auf diese Weise kann eine möglichst geringe Aufbauhöhe für die Flächenheizung erzielt werden, so dass beispielsweise bei Renovierungsarbeiten die nachträgliche Montage von Flächenheizungen begünstigt wird in Räumen, die ursprünglich nicht für die Montage einer Flächenheizung vorgesehen waren.

Die Strukturfläche der Haltefläche, die bei einem Häkchenverschluss auch als Flausch oder Velours bezeichnet wird, kann ein Gewirke, Schlaufen oder pilzförmige Halteelemente aufweisen.

Vorteilhaft kann vorgesehen sein, dass die Strukturfläche als textiles, eine Vielzahl von Schlaufen aufweisendes Flächenelement eines Häkchenverschlusses ausgestaltet ist. Diese Ausgestaltung der Strukturfläche ermöglicht einen sehr flachen Aufbau der Haltefläche, eine wirtschaftliche Herstellung der Haltefläche und ermöglicht zudem ausreichend hohe Haltekräfte zur sicheren Festlegung von Rohren, die als zweites Verschlusselement eines Haftverschlusses den Häkchenteil eines Häkchen- oder Klettverschlusses aufweisen.

Vorteilhaft kann vorgesehen sein, dass die Strukturfläche mit einem Materialüberschuss auf dem Träger befestigt ist, derart, dass das Material der Strukturfläche wellig auf dem Träger aufliegt. Auf diese Weise bewirkt auch bereits das Material der Strukturfläche selbst eine makroskopisch dreidimensionale Ausgestaltung der Haltefläche, die über die mikroskopische Rauhigkeit hinausgeht, welche die Strukturfläche materialbedingt aufweist. Die dreidimensionale Struktur des Trägers, also beispielsweise einer Tiefziehfolie, kann entsprechend flach gehalten werden, und dennoch kann eine ausreichend großflächige Anlage des Rohrs an der Strukturfläche erreicht werden, um eine sichere Festlegung des Rohrs auf der Haltefläche sicherzustellen. Dadurch, dass die Tiefziehfolie weniger stark dreidimensional verformt werden muss, wird das Material der Tiefziehfolie weniger stark verstreckt, die Materialstärke der Tiefziehfolie im Bereich der dreidimensionalen Verstrickung also weniger verringert. Bei gleicher Stabilität, beispielsweise bei gleicher Druckbelastbarkeit, kann folglich eine "schwächere" Tiefziehfolie verwendet werden, beispielsweise aus einem preisgünstigeren Werkstoff oder mit einer geringeren Materialstärke als bei einer Haltefläche, bei welcher die Strukturfläche nicht wellig oder gekräuselt auf dem Träger aufliegt, sondern vielmehr vollflächig glatt dem Träger anliegt.

Bei dieser Ausgestaltung der Haltefläche mit einer welligen Strukturfläche kann vorteilhaft vorgesehen sein, dass das Material der Strukturfläche nur mit den tieferen Bereichen seines wellenförmigen Verlaufs an dem Träger befestigt ist. Die übrigen, höheren Bereiche der Strukturfläche sind also nicht mit einem zusätzlichen Material unterfüttert, beispielsweise mit einem Klebstoff oder dergleichen. Vielmehr ist das Material der Strukturfläche in diesen höheren Bereichen frei beweglich, sodass es verformt werden kann und sich optimal dem Rohrumfang eines auf die Haltefläche aufgelegten Rohres anpassen kann.

Beispielsweise kann die als Halbzeug angelieferte Strukturfläche, beispielsweise eine Schlaufen- bzw. Schlingenware, mittels einer Walze auf den erwärmte Träger aufgepresst werden, sodass das Material der Strukturfläche teilweise in die Oberfläche des Trägers eindringt und nach Erkalten des Trägers eine feste Verbindung zwischen der Strukturfläche und dem Träger geschaffen ist. Bei Verwendung einer profilierten, beispielsweise mit Rippen versehenen Walze werden dementsprechend nur solche Bereiche der Strukturfläche mit dem Träger verbunden, die den nach außen vorstehenden Abschnitten der profilierten Walze anliegen. Alternativ kann vorgesehen sein, wenn die Strukturfläche als textiles Flächenelement ausgestaltet ist, während der Herstellung dieses textilen Flächenelements die Fäden mit unterschiedlichen Fadenspannungen zu führen, sodass sich anschließend in dem textilen Flächenelement automatisch eine gekräuselte bzw. wellige dreidimensionale Struktur ergibt.

Ausführungsbeispiele der Erfindung werden anhand der rein schematischen Darstellungen nachfolgend näher erläutert. Dabei zeigt
- Fig. 1: eine Draufsicht auf ein erstes Ausführungsbeispiel einer Haltefläche,
- Fig. 2 und 3: zwei weitere Ausführungsbeispiele mit unterschiedlichen Geometrien der Reliefstrukturen, wobei jeweils die Strukturfläche teilweise von dem Träger entfernt ist,
- Fig. 4: einen Vertikalschnitt durch einen Abschnitt einer Haltefläche, und die
- Fig. 5: in einer auseinandergezogenen Darstellung einen Abschnitt eines Trägers mit zwei darüber angeordneten, unterschiedlichen Strukturflächen.

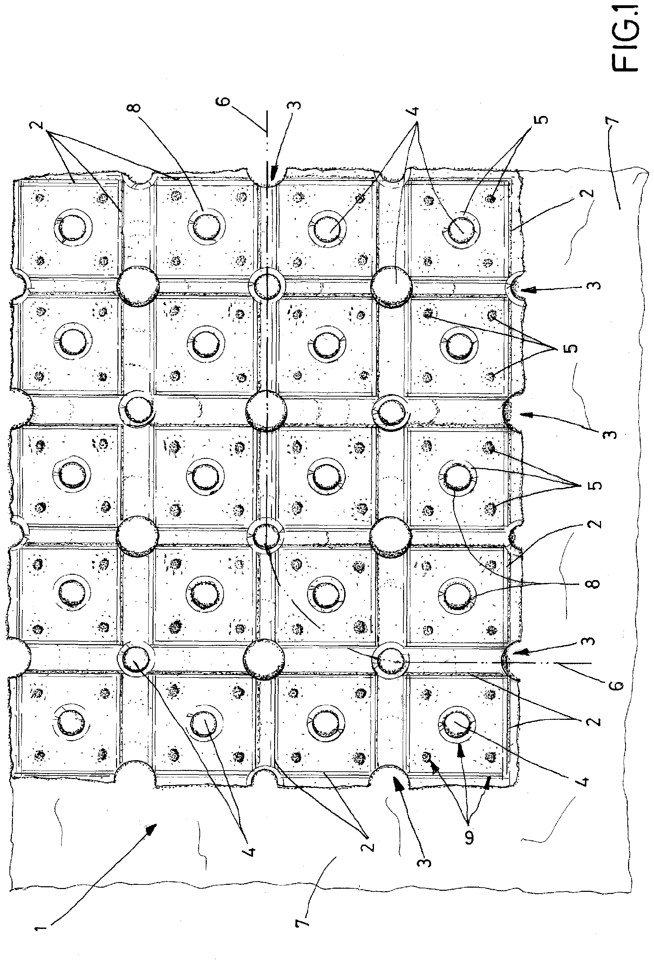

In Fig. 1 ist mit 1 insgesamt eine Haltefläche bezeichnet. Es handelt sich dabei um eine Kunststofffolie als Träger, auf den ein veloursartiger Flauschteil bzw. Schlaufenteil eines Häkchenverschlusses als Strukturfläche unmittelbar aufkaschiert ist, wobei die Strukturfläche den Träger vollflächig bedeckt. Der Träger ist als dreidimensional profilierte Tiefziehfolie ausgestaltet. Der Träger und somit die Haltefläche 1 weist quadratisch angeordnete Rippen 2 auf, wobei die jeweils geschaffenen Quadrate im Abstand zueinander angeordnet sind, so dass jeweils zwei parallele, benachbarte Rippen 2 zwischen sich eine Rinne 3 schaffen, die eine Tiefe von 1 bis 2 mm aufweist und in die ein Flächenheizungsrohr mit einem Teil seines Umfangs eingelegt werden kann. Die Rinnen 3 verlaufen in gleichmäßigen Abständen und in zwei sich um 90° kreuzenden Richtungen.

In der Mitte eines jeden von den Rippen 2 gebildeten Quadrats ist jeweils ein zentraler Durchbruch 4 in Form eines kreisförmigen Lochs vorgesehen, und auch an jedem Kreuzungspunkt der Rinnen 3 ist ein Durchbruch 4 vorgesehen, wobei die Durchbrüche 4 unterschiedliche Größen aufweisen.

Die Haltefläche 1 weist eine Reliefstruktur auf, die entsprechend der Ausgestaltung der Träger-Tiefziehfolie tiefe Bereiche wie z. B. die Rinnen 3 und erhöhte Bereiche aufweist, die allgemein mit 9 gekennzeichnet sind und unterschiedlich ausgestaltet sein können, z. B. in Form der erwähnten Rippen 2. Innerhalb der durch vier Rippen 2 eingeschlossenen Quadrate sind um den dort jeweils vorgesehenen zentralen Durchbruch 4 herum im Abstand weitere erhöhte Bereiche 9 in Form von vier Erhebungen 5 vorgesehen, die punktförmig ausgestaltet sind. Auch die Ränder um die zentralen Durchbrüche 4 im Inneren eines jeden Quadrats bilden erhöhte Bereiche 9, nämlich in Form von ringförmigen Erhebungen 8.

Gestrichelt ist sehr schematisch ein Flächenheizungsrohr 6 symbolisiert. Das Flächenheizungsrohr 6 verläuft mit einem ersten Abschnitt in einer Rinne 3, die in Längsrichtung der Haltefläche 1 verläuft, und mit einem zweiten Abschnitt in einer Rinne 3, die quer dazu verläuft. In dem bogenförmigen Abschnitt dazwischen verläuft das Flächenheizungsrohr 6 zwischen den erwähnten Erhebungen 5 und 8, so dass der Häkchenteil des Häkchenverschlusses, der außen am Flächenheizungsrohr 6 vorgesehen ist, auch in dem bogenförmigen Abschnitt zwischen den Rinnen 3 eine möglichst große Kontaktfläche zur Haltefläche 1 aufweist. Auch in diesem bogenförmigen Abschnitt des Flächenheizungsrohres 6 stellt die Haltefläche 1 muldenartig bzw. rinnenartig eine größere Kontaktfläche der Strukturfläche 11 für das Flächenheizungsrohr 6 bereit, als es bei einer vollkommen planen Ausgestaltung der Haltefläche 1 der Fall ist.

An zwei Seiten, nämlich einer Längsseite und einer Stirnseite, weist die Haltefläche 1 einen Überlappungsstreifen 7 auf. An ihrer Unterseite ist die Haltefläche 1 selbstklebend beschichtet. Diese Beschichtung kann entweder vollflächig vorgesehen sein oder in Art eines aus Linien oder Punkten gebildeten Rasters, so dass jedenfalls die Haltefläche 1 sowohl auf einem Untergrund als auch auf einem Überlappungsstreifen 7 einer benachbarten gleichartigen Haltefläche 1 fixiert werden kann. In diesem Fall ist der Überlappungsstreifen 7 an der Unterseite der Haltefläche 1 vorgesehen.

Alternativ dazu kann der Überlappungsstreifen 7 an der Oberseite der Haltefläche 1 vorgesehen sein: Er kann beispielsweise durch die Strukturfläche gebildet werden, also durch das textile Flächenelement, welches als so genannter Flauschteil die Schlaufen des Häkchenverschlusses bildet. Die Strukturfläche ragt durch einen entsprechend groß bemessenen Zuschnitt an den zwei Seiten über den Träger, nämlich die Tiefziehfolie, hinaus, wie aus Fig. 1 ersichtlich. An seiner Unterseite ist der Überlappungsstreifen 7 so ausgestaltet, dass er mit einer benachbarten Haltefläche 1 verbunden werden kann. Hierzu ist der Überlappungsstreifen 7 an seiner Unterseite beispielsweise mit einem Streifen eines Häkchenteils des Häkchenverschlusses versehen, so dass der Überlappungsstreifen 7 von oben auf die Strukturfläche einer benachbarten Haltefläche 1 aufgedrückt und mit dieser verbunden werden kann. Oder der oberseitig angeordnete Überlappungsstreifen 7 kann zu demselben Zweck an seiner Unterseite selbstklebend beschichtet sein.

Die Herstellung der Haltefläche 1 ist wirtschaftlich vorteilhaft möglich: Durch die geringe Dreidimensionalität, die bei der tiefgezogenen Haltefläche 1 vorgesehen ist, wird deren Herstellung zu vergleichsweise geringen Kosten positiv beeinflusst. Zudem sind die ringförmigen Erhebungen 8, die um die zentralen Durchbrüche 4 vorgesehen sind, dadurch erzeugt, dass dort zunächst eine großflächige kreisrunde Erhebung vorgesehen war, aus der dann der entsprechende kreisförmige Flächenanteil herausgestanzt worden ist, um den zentralen Durchbruch 4 in der Mitte eines Quadrats zu schaffen. Dadurch, dass der Flauschteil des Häkchenverschlusses als Strukturfläche auf den Träger, nämlich auf die Tiefziehfolie aufkaschiert ist, ist ein derartiger Stanzvorgang problemlos möglich, weil das aufkaschierte Flauschmaterial fest mit der Tiefziehfolie verbunden ist und insofern beim Stanzvorgang eine präzise Stanzlinie herstellbar ist, ohne dass sich das beispielsweise als Velours ausgestaltete Flauschmaterial ziehen könnte und nachgeben könnte, ohne durchstanzt zu werden.

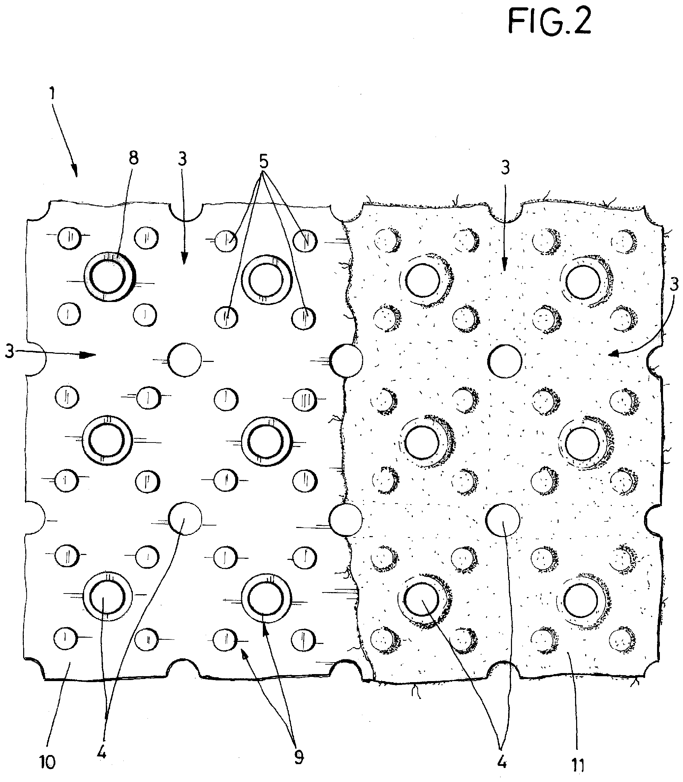

In Fig. 2 ist ein Ausführungsbeispiel einer Haltefläche 1 dargestellt, welches im Wesentlichen dem der Fig. 1 entspricht, allerdings sind in dem Träger keine Rippen vorgesehen, sondern die erhöhten Bereiche der Haltefläche 1 werden ausschließlich durch die Erhebungen 5 und 8 geschaffen. Wie beim Ausführungsbeispiel der Fig. 1 sind jeweils vier kleinere Erhebungen 5 in einem quadratischen Muster rings um eine zentrale, ringförmige Erhebung 8 angeordnet, und diese Anordnung von fünf Erhebungen 5 und 8 wird als eine Noppengruppe bezeichnet.

Es kann in weiterer Unterscheidung vom Ausführungsbeispiel der Fig. 1 vorgesehen sein, dass sie vier kleineren Erhebungen 5 einer solchen Noppengruppe bei dem Ausführungsbeispiel der Fig. 2 einen größeren Abstand von der zentralen Erhebung 8 aufweisen als beim Ausführungsbeispiel der Fig. 1. Oder das quadratische Rastermaß, in welchem die einzelnen Noppengruppen zueinander angeordnet sind, kann kleiner sein als beim Ausführungsbeispiel der Fig. 1, sodass jedenfalls im Ergebnis zwischen den Noppengruppen geradlinig verlaufende und sich kreuzende Rinnen 3 geschaffen werden, welche eine ähnliche Breite aufweisen wie die Rinnen 3, die sich beim Ausführungsbeispiel der Fig. 1 zwischen den parallelen Rippen 2 ergeben.

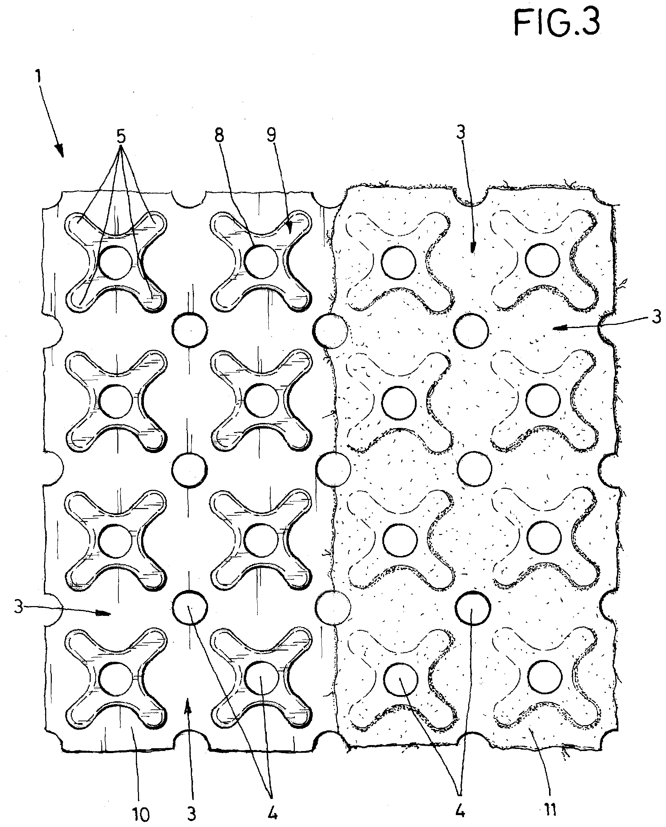

Beim Ausführungsbeispiel der Fig. 3 sind die vier kleineren Erhebungen 5, die bei den Ausführungsbeispielen der Fig. 1 und 2 separat ausgestaltet sind und jeweils die vier Eckpunkte eines Quadrats bilden, zu einem kreuzförmigen bzw. X-förmigen erhöhten Bereich 9 verbunden. Auch diese kreuz- bzw. X-förmigen erhöhten Bereiche 9 sind in einem quadratischen Raster angeordnet, sodass sich auch bei diesem Ausführungsbeispiel zwischen den erhöhten Bereichen 9 Rinnen 3 ergeben, die geradlinig verlaufen und sich kreuzen.

Bei den Ausführungsbeispielen der Fig. 2 und 3 können Durchbrüche 4 wie beim Ausführungsbeispiel der Fig. 1 vorgesehen sein, beispielsweise als zentrale Durchbrüche 4 stets in der Mitte einer Noppengruppe bzw. eines kreuzförmigen erhöhten Bereichs 9, sowie beispielsweise als Kreuzungs-Durchbrüche 4 stets dort, wo sich zwei Rinnen 3 kreuzen. Beim Ausführungsbeispiel der Fig. 3 verbinden somit die X-förmigen erhöhten Bereiche 9 nicht nur die vier kleineren Erhebungen 5, sondern um die zentralen Durchbrüche 4 herum bilden sie integral auch die Erhebungen 8, die beim Ausführungsbeispiel der Fig. 1 und 2 als separate Ringe ausgestaltet sind.

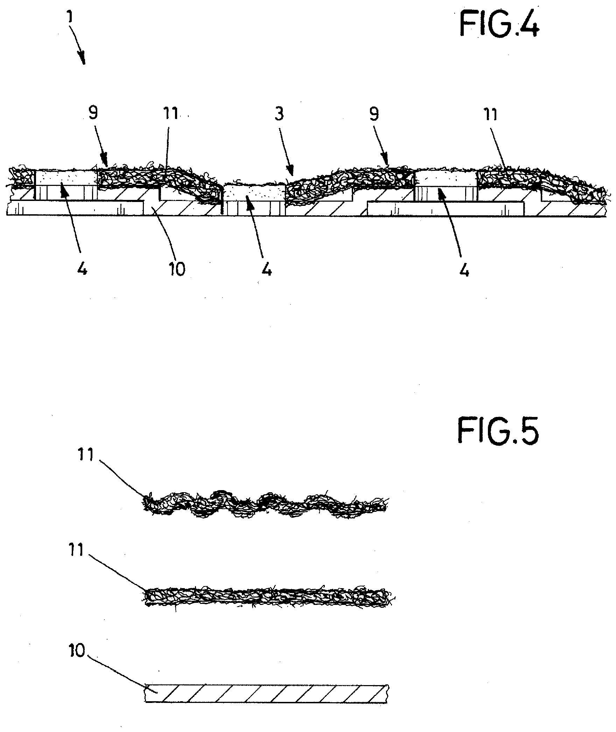

In Fig. 4 ist ein Vertikalschnitt durch eine Haltefläche 1 dargestellt, wobei der Schnitt durch zwei erhöhte Bereiche 9 sowie durch den Kreuzungsbereich zweier Rinnen 3 und somit durch die jeweiligen Durchbrüche 4 verläuft.

Die Haltefläche 1 besteht im Bereich dieses Vertikalschnitts aus lediglich zwei Elementen: eine dreidimensional verformte Tiefziehfolie weist durch ihre Verformung eine Reliefstruktur auf und bildet einen unteren Träger 10, auf welchen eine Strukturfläche 11 aufkaschiert ist, die als Flauschteil eines Häkchenverschlusses ausgestaltet ist und eine Vielzahl von Schlaufen aufweist. Beim direkten Aufkaschieren wird die Strukturfläche 11 in das erwärmte Material des Trägers 10 eingedrückt, sodass sich auch ohne zusätzliche Materialien, wie zum Beispiel Klebstoff, eine feste Verbindung zwischen dem Träger 10 und der Strukturfläche 11 ergibt.

Beim Aufkaschieren wird die Strukturfläche 11 auf die erhöhten Bereiche 9 der Reliefstruktur des Trägers 10 gedrückt. Zwischen den erhöhten Bereichen 9 hängt das Material der Strukturfläche 11 frei durch, gegebenenfalls ohne Kontakt mit dem Träger zu haben. Um beim Stanzen der Durchbrüche 4 im Kreuzungsbereich von Rinnen 3 den Stanzvorgang zu erleichtern und ein präzises Stanzergebnis sicherzustellen, kann ein so stark profiliertes Andruck-Werkzeug verwendet werden, dass beispielsweise mittels einer profilierten Walze die Strukturfläche 11 auch in diesen tiefer liegenden Kreuzungsbereichen an den Träger 10 angedrückt werden kann und auch in diesen tiefen Bereichen des Trägers 10 die Strukturfläche 11 auf den Träger 10 aufkaschiert werden kann.

Fig. 5 zeigt in einer auseinandergezogenen Darstellung einen Träger 10 mit zwei darüber angeordneten, unterschiedlichen Strukturflächen 11. Der in Fig. 5 unten ersichtliche Träger 10 ist als ebenes Element dargestellt, ohne eine Reliefstruktur, weil Fig. 5 lediglich einen kleinen Abschnitt des Trägers 10 zeigt und in diesem Abschnitt keine dreidimensionale Verformung vorliegt.

Über dem Träger 10 ist in der Mitte der Fig. 5 eine erste Variante einer Strukturfläche 11 dargestellt, die aufgrund der Materialbeschaffenheit des Flauschteils eines Häkchenverschlusses mikroskopisch rau ausgestaltet ist, weil sie eine Vielzahl von Schlaufen aufweist. Makroskopisch ist die Strukturfläche 11 jedoch als ebene Fläche dargestellt.

Im Unterschied dazu ist die in Fig. 5 oben dargestellte Strukturfläche 11 nicht nur mikroskopisch rau, nämlich aufgrund der Materialbeschaffenheit des Flauschteils, sondern sie ist auch makroskopisch rau, da bei der Herstellung dieses Flauschteils die Fäden mit unterschiedlicher Fadenspannung geführt wurden, sodass sich eine dreidimensionale, reliefartige, gekräuselte, bzw. wellenförmige Struktur dieses textilen Flächenelements ergibt. Derartige Strukturen werden auch als "crushed", also knittrig, bezeichnet.

Verglichen mit der ebenen bzw. glatten Ausgestaltung der in Fig. 5 mittig dargestellten Strukturfläche 11 wird bei der oberen, reliefartigen Strukturfläche 11 das Material der Strukturfläche 11 also mit einem Materialüberschuss auf den Träger 10 aufgebracht. Unabhängig von der Reliefstruktur des Trägers 10 weist bereits die Strukturfläche 11 eine Dreidimensionalität bzw. Tiefe auf, sodass sie einem auf die Haltefläche 1 aufgedrückten Flächenheizungsrohr 6 einen besonders sicheren Halt vermittelt, selbst dort, wo der Träger 10 eben verläuft.

Eine ähnlich makroskopische raue Struktur der Strukturfläche 11 auf dem Träger 10 kann auch erreicht werden, wenn die Strukturfläche 11 zunächst nicht makroskopisch rau vorliegt, also beispielsweise nicht als "gecrushtes" Textil hergestellt wird. Wenn beispielsweise eine makroskopisch glatte Strukturfläche wie die mittig in Fig. 5 dargestellte Strukturfläche 11 verwendet wird, so kann diese glatte Strukturfläche 11 beim Aufkaschieren mittels einer profilierten Walze auf den Träger 10 gedrückt werden. Durch die Verwendung der profilierten Walze kann ein gekräuselter oder wellenförmiger Verlauf der Strukturfläche 11 auf dem Träger 10 erzielt werden.

Dementsprechend kann eine solch reliefartige Strukturfläche 11, wie die beiden genannten makroskopische rauen Varianten, auf einem Träger verwendet werden, der eine nur geringe Oberflächenprofilierung aufweist, und dennoch kann eine erhebliche Haltekraft für die Rohrleitungen sichergestellt werden.

## Patentansprüche

1. Haltefläche (1) einer Flächenheizung,
wobei die Haltefläche (1) einen Träger (10) aufweist,
sowie eine Strukturfläche (11), die einen der beiden Teile eines Haftverschlusses bildet,
und mit dem Träger (10) verbunden ist und der Träger (10) eine Reliefstruktur mit tiefen und erhöhten Bereichen (9) aufweist, welche die Aufnahme eines Flächenheizungsrohrs (6) mit einem Abschnitt seines Umfangs zwischen den erhöhten Bereichen (9) ermöglichend ausgestaltet ist, **dadurch gekennzeichnet,**
**dass** die Strukturfläche (11) unmittelbar auf den Träger (10) aufkaschiert ist,
derart, dass das Material der Strukturfläche (11) teilweise in die Oberfläche an der zur Aufnahme des Flächenheizungsrohres (6) vorgesehenen Vorderseite des Trägers (10) eingepresst ist.

2. Haltefläche nach Anspruch 1,
**dadurch gekennzeichnet,**
**dass** die Reliefstruktur in Art eines Verlegerasters ausgestaltet ist.

3. Haltefläche nach Anspruch 1 oder 2,
**dadurch gekennzeichnet,**
**dass** der Träger (10) durch eine dreidimensional verformte Tiefziehfolie gebildet ist.

4. Haltefläche nach einem der vorhergehenden Ansprüche,
**dadurch gekennzeichnet,**
**dass** die Haltefläche (1) eine Vielzahl von Durchbrüchen (4) aufweist.

5. Haltefläche einem der vorhergehenden Ansprüche,
**dadurch gekennzeichnet,**
**dass** die Haltefläche (1) eine Höhe von höchstens 10 mm aufweist.

6. Haltefläche nach Anspruch 5,
**dadurch gekennzeichnet,**
**dass** die Haltefläche (1) eine Höhe von höchstens 3 mm aufweist.

7. Haltefläche nach einem der vorhergehenden Ansprüche,
**dadurch gekennzeichnet,**
**dass** erhöhte Bereiche (9) der Haltefläche (1) als parallele Rippen (2) ausgestaltet sind,
die in einem Abstand zueinander verlaufen, welcher die Aufnahme eines Flächenheizungsrohrs (6) mit einem Abschnitt seines Umfangs zwischen den Rippen (2) ermöglichend bemessen ist.

8. Haltefläche nach Anspruch 7,
**dadurch gekennzeichnet,**
**dass** die Reliefstruktur ein Muster aus sich kreuzenden Rinnen (3) bildet, wobei jeweils zwei benachbarte erhöhte Bereiche (9) eine solche Rinne (3) zwischen sich bilden und jeweils eine Vielzahl von Rinnen (3) parallel nebeneinander angeordnet ist.

9. Haltefläche nach Anspruch 8,
**dadurch gekennzeichnet,**
**dass** der Abstand der Rinnen (3) zueinander größer ist als der Abstand zweier eine Rinne (3) bildender erhöhter Bereiche (9) zueinander.

10. Haltefläche nach Anspruch 8,
**dadurch gekennzeichnet,**
**dass** die Rinnen (3) in einem quadratischen Raster angeordnet sind.

11. Haltefläche nach Anspruch 8,
**dadurch gekennzeichnet,**
**dass** in den Flächen zwischen den sich kreuzenden Rinnen (3) Erhebungen (5, 8) vorgesehen sind und derart voneinander beabstandet sind, dass sich zwischen ihnen ein Freiraum ergibt, in welchem ein Flächenheizungsrohr (6) bogenförmig und zwischen den Erhebungen (5, 8) verlaufend verlegbar ist.

12. Haltefläche nach einem der vorhergehenden Ansprüche,
**dadurch gekennzeichnet,**
**dass** an wenigstens einem Rand ein unter der Haltefläche (1) vorstehender Überlappungsstreifen (7) vorgesehen ist, der mit einer zweiten, gleichartigen Haltefläche (1) verbindbar ist.

13. Haltefläche nach Anspruch 12,
**dadurch gekennzeichnet,**
**dass** die Haltefläche (1) eine Verklebung im Überlappungsbereich mit einer zweiten, gleichartigen Haltefläche (1) ermöglichend selbstklebend ausgestaltet ist.

14. Haltefläche nach einem der vorhergehenden Ansprüche,
**dadurch gekennzeichnet,**
**dass** die Haltefläche (1) an ihrer Unterseite selbstklebend ausgestaltet ist.

15. Haltefläche nach den Ansprüchen 13 und 14,
**dadurch gekennzeichnet,**
**dass** die Haltefläche (1) an ihrer Unterseite auch über den Überlappungsbereich hinausgehend selbstklebend ausgestaltet ist.

16. Haltefläche nach einem der vorhergehenden Ansprüche,
**dadurch gekennzeichnet,**
**dass** die Strukturfläche (11) als textiles, eine Vielzahl von Schlaufen aufweisendes Flächenelement eines Häkchenverschlusses ausgestaltet ist.

17. Haltefläche nach einem der vorhergehenden Ansprüche,
**dadurch gekennzeichnet,**
**dass** die Strukturfläche (11) mit einem Materialüberschuss auf dem Träger (10) befestigt ist,
derart, dass das Material der Strukturfläche (11) wellig auf dem Träger (10) aufliegt.

18. Haltefläche nach Anspruch 17,
**dadurch gekennzeichnet,**
**dass** das Material der Strukturfläche (11) nur mit den tieferen Bereichen seines wellenförmigen Verlaufs an dem Träger (10) befestigt ist.

## Claims

1. Retaining surface (1) of a radiant heating system, where the retaining surface (1) incorporates a support member (10), and a textured surface (11) that forms one of the two parts of an adhesive bond, and is joined to the support member (10) and the support member (10) incorporates a relief texture having low and raised areas (9) and designed to enable a radiant-heating system pipe (6) to be held between the raised areas (9) by a section of its circumference,
**characterised in that** the textured surface (11) is applied straight to the support member (10) in such a way that the material of the textured surface (11) is partly pressed into the surface on that front side of the support member (10) that is provided for to hold the radiant-heating system pipe (6).

2. Retaining surface in accordance with claim 1, **characterised in that** the relief texture is designed like a laying grid.

3. Retaining surface in accordance with claim 1 or 2, **characterised in that** the support member (10) is formed by three-dimensionally shaped deep-drawing film.

4. Retaining surface in accordance with any one of the foregoing claims, **characterised in that** the retaining surface (1) incorporates a large number of through-holes (4).

5. Retaining surface in accordance with any one of the foregoing claims, **characterised in that** the retaining surface (1) has a maximum height of 10 mm.

6. Retaining surface in accordance with claim 5, **characterised in that** the retaining surface (1) has a maximum height of 3 mm.

7. Retaining surface in accordance with any one of the foregoing claims, **characterised in that** raised areas (9) of the retaining surface (1) are designed as parallel ribs (2) that extend parallel to one another and are spaced apart from one another so as to enable a radiant-heating system pipe (6) to be held between the ribs (2) by a section of its circumference.

8. Retaining surface in accordance with claim 7, **characterised in that** the relief texture forms a pattern of intersecting channels (3), where every two adjacent raised areas (9) form such a channel (3) between them and together form a large number of channels (3) arranged parallel to each other.

9. Retaining surface in accordance with claim 8, **characterised in that** the distance between the channels (3) is greater than the distance between two raised areas (9) forming a channel (3).

10. Retaining surface in accordance with claim 8, **characterised in that** the channels (3) are arranged in a square grid.

11. Retaining surface in accordance with claim 8, **characterised in that** raised portions (5, 8) are provided for in the surfaces between the intersecting channels (3) and are set far enough apart from each other to form between them a free space in which a radiant-heating system pipe (6) can be laid in a curve so as to extend between the raised portions (5, 8).

12. Retaining surface in accordance with any one of the foregoing claims, **characterised in that** on at least one edge an overlap strip (7) that protrudes from under the retaining surface (1) and that can be joined to a second retaining surface (1) of the same kind is provided for.

13. Retaining surface in accordance with claim 12, **characterised in that** the retaining surface (1) is designed to be self-adhesive so that it can be bonded to a second retaining surface (1) of the same kind in its overlap area.

14. Retaining surface in accordance with any one of the foregoing claims, **characterised in that** the retaining surface (1) is designed to be self-adhesive on its underside.

15. Retaining surface in accordance with claims 13 and 14, **characterised in that** the retaining surface (1) is designed to be self-adhesive also on its underside extending beyond the overlap area.

16. Retaining surface in accordance with any one of the foregoing claims, **characterised in that** the textured surface (11) is designed as a textile flat part of a hook fastener incorporating a large number of loops.

17. Retaining surface in accordance with any one of the foregoing claims, **characterised in that** the textured surface (11) is fastened onto the support member (10) by an excess of material in such a way that the material of the textured surface (11) lies on the support member (10) in folds.

18. Retaining surface in accordance with claim 17, **characterised in that** the material of the textured surface (11) is fastened onto the support member (10) only by the lower-lying parts of its folded section.

## Revendications

1. Surface de retenue (1) d'un chauffage à surface chauffante, sachant que la surface de retenue (1) présente un support (10) ainsi qu'une surface structurée (11) formant l'une des deux parties d'une fermeture adhésive, et qu'elle est reliée au support (10) et que le support (10) présente une structure en relief composée de zones en creux et de zones haussées (9), structure qui est configurée pour permettre la réception d'un tuyau (6) de chauffage à surface chauffante avec un segment de sa périphérie situé entre les zones haussées (9), **caractérisée en ce que** la surface structurée (11) est directement contrecollée sur le support (10) de sorte que le matériau de la surface structurée (11) se retrouve en partie pressé dans la surface contre le côté avant du support (10), côté qui est prévu pour recevoir le tuyau (6) de chauffage à surface chauffante.

2. Surface de retenue selon la revendication 1, **caractérisée en ce que** la structure en relief est configurée en forme de quadrillage de pose.

3. Surface de retenue selon la revendication 1 ou 2, **caractérisée en ce que** le support (10) est formé par une feuille emboutie déformée de façon tridimensionnelle.

4. Surface de retenue selon l'une des revendications précédentes, **caractérisée en ce que** la surface de retenue (1) présente un grand nombre de perforations (4).

5. Surface de retenue selon l'une des revendications précédentes, **caractérisée en ce que** la surface de retenue (1) présente une hauteur de 10 mm maximum.

6. Surface de retenue selon la revendication 5, **caractérisée en ce que** la surface de retenue (1) présente une hauteur de 3 mm maximum.

7. Surface de retenue selon l'une des revendications précédentes, **caractérisée en ce que** les zones haussées (9) de la surface de retenue (1) sont configurées sous forme de nervures parallèles (2) situées les unes des autres à une distance dimensionnée de façon permettant de recevoir un tuyau (6) de chauffage à surface chauffante avec un segment de sa périphérie entre les nervures (2).

8. Surface de retenue selon la revendication 7, **caractérisée en ce que** la structure en relief forme un motif composé de rigoles (3) qui se croisent, sachant que respectivement deux zones haussées (9) voisines forment une telle rigole (3) entre elles et que respectivement un grand nombre de rigoles (3) sont disposées parallèles les unes à côté des autres.

9. Surface de retenue selon la revendication 8, **caractérisée en ce que** l'écart des rigoles (3) entre elles est supérieur à l'écart réciproque de deux zones haussées (9) formant une rigole (3).

10. Surface de retenue selon la revendication 8, **caractérisée en ce que** les rigoles (3) sont disposées dans une grille carrée.

11. Surface de retenue selon la revendication 8, **caractérisée en ce que** dans les surfaces situées entre les rigoles (3) qui se croisent, des éminences (5, 8) sont prévues et distantes les unes des autres de sorte qu'il résulte entre elles un espace libre dans lequel un tuyau (6) de chauffage à surface chauffante puisse être posé avec un tracé incurvé et situé entre les éminences (5, 8).

12. Surface de retenue selon l'une des revendications précédentes, **caractérisée en ce qu'**au moins sur un bord est prévu une bande de chevauchement (7) faisant saillie sous la surface de retenue (1), bande qu'il est possible de relier à une seconde surface de retenue (1) du même type.

13. Surface de retenue selon la revendication 12, **caractérisée en ce que** la surface de retenue (1) est configurée pour permettre dans la zone de chevauchement le collage autocollant avec une seconde surface de retenue (1) du même type.

14. Surface de retenue selon l'une des revendications précédentes, **caractérisée en ce que** la face inférieure de la surface de retenue (1) est configurée autocollante.

15. Surface de retenue selon les revendications 13 et 14, **caractérisée en ce que** la face inférieure de la surface de retenue (1) est configurée autocollante aussi au-delà de la zone de chevauchement.

16. Surface de retenue selon l'une des revendications précédentes, **caractérisée en ce que** la surface structurée (11) est configurée comme élément textile plat, présentant un grand nombre de boucles, d'une fermeture auto-agrippante.

17. Surface de retenue selon l'une des revendications précédentes, **caractérisée en ce que** la surface structurée (11) est fixée avec un excédent de matériau sur le support (10), de sorte que le matériau de la surface structurée (11) applique ondulé sur le support (10).

18. Surface de retenue selon la revendication 17, **caractérisée en ce que** le matériau de la surface structurée (11) n'est fixé contre le support (10) que par les zones en creux de son tracé ondulé.
